# EUROPÄISCHE PATENTSCHRIFT

(11) **EP 3 034 366 B1**
(45) Veröffentlichungstag und Bekanntmachung des Hinweises auf die Patenterteilung: **25.04.2018**
(21) Anmeldenummer: 15194082.2
(22) Anmeldetag: 11.11.2015
(51) Int. Cl.: B60S 1/04, B60S 1/38

(54) **WISCHBLATTVORRICHTUNG**
WIPER BLADE DEVICE
DISPOSITIF DE RACLETTE D'ESSUIE-GLACE

(30) Priorität: 19.12.2014 DE 102014226537
(43) Veröffentlichungstag der Anmeldung: 22.06.2016
(73) Patentinhaber: ROBERT BOSCH GMBH, 70442 Stuttgart (DE)
(72) Erfinder: Depondt, Helmut, 3370 Boutersem (BE)

(56) Entgegenhaltungen:
- WO-A1-2014/079488
- DE-A1- 10 144 081
- DE-A1-102011 078 163
- FR-A1- 2 816 269
- JP-A- 2009 040 116

## Beschreibung

### Stand der Technik

Es ist bereits eine Wischblattvorrichtung mit zumindest einem Windabweiserelement und mit zumindest einer Endkappe, die eine Deckwandung umfasst, die zu einer Abdeckung eines Endbereichs des zumindest einen Windabweiserelements vorgesehen ist, vorgeschlagen worden.

Aus der WO2014/079488 A1 ist eine Wischblattvorrichtung mit den Merkmalen des Oberbegriffs des Anspruchs 1 bekannt.

### Offenbarung der Erfindung

Die Erfindung geht aus von einer Wischblattvorrichtung mit zumindest einem Windabweiserelement und mit zumindest einer Endkappe, die eine Deckwandung umfasst, die zu einer Abdeckung eines Endbereichs des zumindest einen Windabweiserelements vorgesehen ist.

Es wird vorgeschlagen, dass die Deckwandung eine Ausnehmung umfasst und das Windabweiserelement eine Windabweiserspitze umfasst, die zumindest in einem montierten Zustand durch die Ausnehmung hindurchgeführt ist. Dadurch kann eine besonders flache Bauweise der Wischblattvorrichtung erreicht werden. Ein Überstehen der Endkappe über das Windabweiserelement kann vorteilhaft vermieden werden. Unter einem "Windabweiserelement" soll in diesem Zusammenhang insbesondere ein Element verstanden werden, das dazu vorgesehen ist, eine auf die Wischblattvorrichtung wirkende Luftanströmung beziehungsweise einen Fahrtwind abzuweisen und/oder für ein Anpressen der Wischblattvorrichtung auf eine zu wischende Fahrzeugscheibe zu nutzen. Insbesondere bildet das Windabweiserelement einen Spoiler aus. Vorzugsweise besteht das Windabweiserelement zumindest teilweise aus Gummi und/oder aus einem wenigstens teilelastischen Kunststoff. Bevorzugt weist das Windabweiserelement zumindest eine konkave Anströmfläche auf. Das Windabweiserelement weicht insbesondere von einer Endkappe, einer Wischlippe und/oder von einem Wischblattadapter ab.

Vorteilhaft erstreckt sich das Windabweiserelement im montierten Zustand über zumindest einen wesentlichen Teil, insbesondere über wenigstens 30 % einer Längserstreckung der Wischblattvorrichtung. Bevorzugt weist das Windabweiserelement zumindest ein krallenartiges Halteelement zur Befestigung an einer Federschiene und/oder einer Wischleiste auf. Unter einer "Endkappe" soll in diesem Zusammenhang insbesondere ein Bauteil verstanden werden, das dazu vorgesehen ist, an einem Ende einer Federschiene und/oder an einem Ende eines Windabweiserelements befestigt zu werden. Die Endkappe ist insbesondere dazu vorgesehen, in einem montierten Zustand einen Endabschluss der Wischblattvorrichtung bereitzustellen. Bevorzugt ist die Endkappe zumindest teilweise aus einem Kunststoff gebildet.

Vorzugsweise umgreift die Endkappe in wenigstens einem montierten Zustand einen Teil der Federschiene. Vorzugsweise umfasst die Wischblattvorrichtung genau zwei Endkappen, jeweils eine für jedes Ende der Federschiene. Weiterhin vorteilhaft ist die Endkappe als ein Abdeckungsbauteil ausgebildet und zumindest für eine Steckmontage an der Federschiene und/oder an dem Windabweiserelement vorgesehen. Besonders bevorzugt erstreckt sich die Endkappe über mindestens 10 mm und maximal 80 mm in eine Längsrichtung der Federschiene und/oder des Windabweiserelements. Die Deckwandung der Endkappe ist vorzugsweise bereichsweise konkav gekrümmt ausgebildet. Insbesondere ist die Deckwandung im montierten Zustand an einer fahrzeugscheibenabgewandten Seite der Wischblattvorrichtung angeordnet. Die Deckwandung ist insbesondere lediglich bereichsweise zu einer Abdeckung des Endbereichs des zumindest einen Windabweiserelements vorgesehen.

Unter einem "Endbereich eines Windabweiserelements" soll in diesem Zusammenhang insbesondere ein Bereich verstanden werden, der sich über maximal 10 % einer Gesamtlängserstreckung des Windabweiserelements von einem freien Ende des Windabweiserelements in Richtung eines weiteren, abgewandten freien Endes erstreckt. Unter einer "Windabweiserspitze" soll in diesem Zusammenhang insbesondere ein Bereich des Windabweiserelements verstanden werden, der sich in einem Betriebszustand um eine fahrzeugscheibenabgewandte Oberkante des Windabweiserelements erstreckt. Vorzugsweise erstreckt sich der Bereich des Windabweiserelements in einem Betriebszustand um die fahrzeugscheibenabgewandte Oberkante des Windabweiserelements um maximal 10 mm, bevorzugt um maximal 5 mm.
Bevorzugt durchdringt die Ausnehmung die Deckwandung in eine Vertikalrichtung vollständig. Die Vertikalrichtung verläuft in einem Betriebszustand insbesondere zumindest im Wesentlichen senkrecht zur zu wischenden Fahrzeugscheibe. Ferner verläuft die Vertikalrichtung zumindest im Wesentlichen senkrecht zu einer Längserstreckungsrichtung der Wischblattvorrichtung und zumindest im Wesentlichen senkrecht zu einer Wischrichtung. Unter "zumindest im Wesentlichen" soll in diesem Zusammenhang insbesondere mit einer Abweichung von weniger als 20°, bevorzugt mit einer Abweichung von weniger als 10°, besonders bevorzugt mit einer Abweichung von weniger als 5° verstanden werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Nach der Erfindung wird vorgeschlagen, dass das zumindest eine Windabweiserelement die Deckwandung in eine Vertikalrichtung überragt. Dadurch kann die Wischblattvorrichtung in einem Längsendbereich besonders flach ausgebildet werden. Ferner wird vorgeschlagen, dass die zumindest eine Endkappe eine geringere Bauhöhe aufweist als das zumindest eine Windabweiserelement. Dadurch kann der Längsendbereich der Wischblattvorrichtung besonders kompakt ausgebildet werden. Unter einer "Bauhöhe" soll in diesem Zusammenhang insbesondere eine maximale Erstreckung eines Elements in einem Betriebszustand in Vertikalrichtung verstanden werden.

Des Weiteren wird vorgeschlagen, dass die Ausnehmung schlitzförmig ausgebildet ist. Dadurch kann die Windabweiserspitze aerodynamisch besonders günstig in der Ausnehmung angeordnet sein. Unter "schlitzförmig" soll in diesem Zusammenhang insbesondere verstanden werden, dass eine Längserstreckung zumindest doppelt oder bevorzugt zumindest dreimal so groß ist wie eine Quererstreckung. Die Ausnehmung weist vorzugsweise einen rechteckigen Querschnitt auf.

Weiterhin wird vorgeschlagen, dass sich die Ausnehmung innerhalb der Deckwandung um weniger als ein Drittel einer Gesamtlängserstreckung der Endkappe erstreckt. Dadurch kann die Endkappe besonders stabil ausgebildet werden.

Zudem wird vorgeschlagen, dass das zumindest eine Windabweiserelement die Ausnehmung in einem montierten Zustand um mehr als die Hälfte ausfüllt. Unter "um mehr als die Hälfte" soll in diesem Zusammenhang insbesondere um mehr als 50 %, bevorzugt mehr als 60 % verstanden werden.

Weiterhin wird vorgeschlagen, dass die zumindest eine Endkappe zumindest ein Führungsmittel aufweist, das dazu vorgesehen ist, bei einer Montage entlang einer Längserstreckungsrichtung der Ausnehmung auf das Windabweiserelement geführt zu werden. Dadurch kann eine besonders einfache Montage der Endkappe erfolgen. Ein Einführen der Windabweiserspitze in die Ausnehmung der Deckwandung kann ebenfalls besonders einfach erfolgen. Das zumindest eine Führungsmittel bildet vorzugsweise eine Führungsnut aus.

Des Weiteren wird vorgeschlagen, dass die Wischblattvorrichtung zumindest eine Federschiene umfasst, wobei die Endkappe zumindest ein Rastmittel aufweist, das dazu vorgesehen ist, mit der zumindest einen Federschiene verrastet zu werden. Dadurch kann eine besonders hohe Betriebssicherheit erreicht werden.

Ferner wird ein Fahrzeug mit einer Wischblattvorrichtung und mit einer Wischblattlagereinheit zur Lagerung der Wischblattvorrichtung vorgeschlagen, wobei die Wischblattlagereinheit zumindest zwei Wandungen umfasst, die einen Aufnahmebereich zur Aufnahme der Wischblattvorrichtung aufspannen, dessen Breite zumindest im Wesentlichen einer Vertikalerstreckung der Wischblattvorrichtung entspricht.

Dadurch kann eine besonders kompakte und unauffällige Lagerung der Wischblattvorrichtung am Fahrzeug erreicht werden.

Weiterhin vorgeschlagen wird ein Verfahren zu einer Montage einer Wischblattvorrichtung, mit zumindest einem Windabweiserelement und mit zumindest einer Endkappe, die eine Deckwandung umfasst, die zu einer Abdeckung eines Endbereichs des zumindest einen Windabweiserelements vorgesehen ist, wobei das Windabweiserelement eine Windabweiserspitze umfasst, die bei einer Montage in eine Ausnehmung der Deckwandung durchgeführt wird. Somit kann auf einfache Weise eine besonders flache Wischblattvorrichtung montiert werden.

Die erfindungsgemäße Wischblattvorrichtung soll hierbei nicht auf die oben beschriebene Anwendung und Ausführungsform beschränkt sein. Insbesondere kann die erfindungsgemäße Wischblattvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischblattvorrichtung in einer perspektivischen Darstellung,
- Fig. 2: die Wischblattvorrichtung nach Figur 1 in einer Draufsicht,
- Fig. 3: die Wischblattvorrichtung nach Figur 1 in einer Seitenansicht und
- Fig. 4: die Wischblattvorrichtung nach Figur 1 in einem Teilschnitt.

### Beschreibung des Ausführungsbeispiels

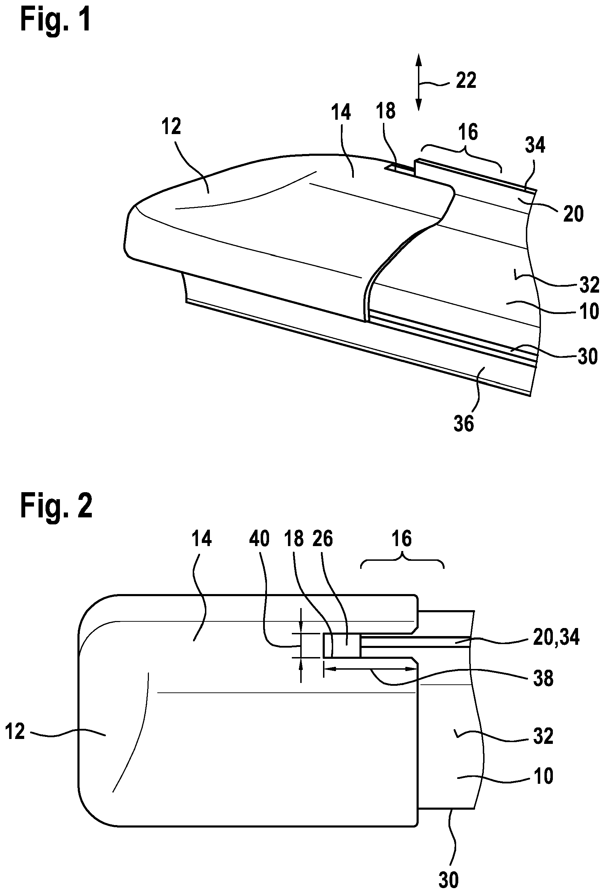

In den Figuren 1 und 2 ist eine Wischblattvorrichtung mit einem Windabweiserelement 10 und mit einer Endkappe 12 gezeigt. Das Windabweiserelement 10 weist eine Vorderkante 30 auf. Von der Vorderkante 30 aus bildet das Windabweiserelement 10 eine zunächst konvex, dann konkav gekrümmte Windabweisfläche 32 zum Abweisen von anströmender Luft aus. An der Vorderkante 30 umgreift das Windabweiserelement 10 eine Federschiene 26 der Wischblattvorrichtung krallenartig. Von der Vorderkante 30 aus erstreckt sich die Windabweisfläche 32 bis zu einer Windabweiserspitze 20 des Windabweiserelements 10. Die Windabweiserspitze 20 bildet einen Bereich des Windabweiserelements 10 aus, der am weitesten von der Federschiene 26 entfernt ist. Die Windabweiserspitze 20 umfasst dabei eine Oberkante 34 des Windabweiserelements 10. Das Windabweiserelement 10 erstreckt sich von einem nicht näher gezeigten Wischarmadapter bis in einen Endbereich 16 des Windabweiserelements 10. Die Wischblattvorrichtung weist eine Wischlippe 36 auf. Die Wischlippe 36 ist zum Wischen einer Fahrzeugscheibe 42 vorgesehen.

Die Endkappe 12 umfasst eine Deckwandung 14, die zu einer Abdeckung des Endbereichs 16 des Windabweiserelements 10 vorgesehen ist. Die Deckwandung 14 ist in ihrer Form an die Windabweisfläche 32 angeglichen. Die Deckwandung 14 liegt flächig auf der Windabweisfläche 32 auf. Die Deckwandung 14 umfasst eine Ausnehmung 18. Die Ausnehmung 18 ist in einem obersten Bereich der Deckwandung 14 angeordnet. Der oberste Bereich ist dabei der im montierten Zustand am weitesten von der Wischlippe 36 beabstandete Bereich der Endkappe 12.

Die Ausnehmung 18 durchdringt die Deckwandung 14 in eine Vertikalrichtung 22 vollständig. Die Ausnehmung 18 ist schlitzförmig ausgebildet. Eine Länge 38 der Ausnehmung 18 ist dabei mindestens dreimal so lang wie eine Breite 40 der Ausnehmung 18. Die Ausnehmung 18 weist einen rechteckigen Querschnitt auf. Die Ausnehmung 18 erstreckt sich innerhalb der Deckwandung 14 um weniger als ein Drittel einer Gesamtlängserstreckung der Endkappe 12.

Die Windabweiserspitze 20 ist im montierten Zustand durch die Ausnehmung 18 hindurchgeführt. Das Windabweiserelement 10 füllt die Ausnehmung 18 im gezeigten montierten Zustand um mehr als die Hälfte aus. In diesem Ausführungsbeispiel füllt das Windabweiserelement 10 die Ausnehmung 18 um weniger 80 % aus. Es ist in diesem Zusammenhang auch denkbar, dass das Windabweiserelement 10 die Ausnehmung 18 vollständig ausfüllt.

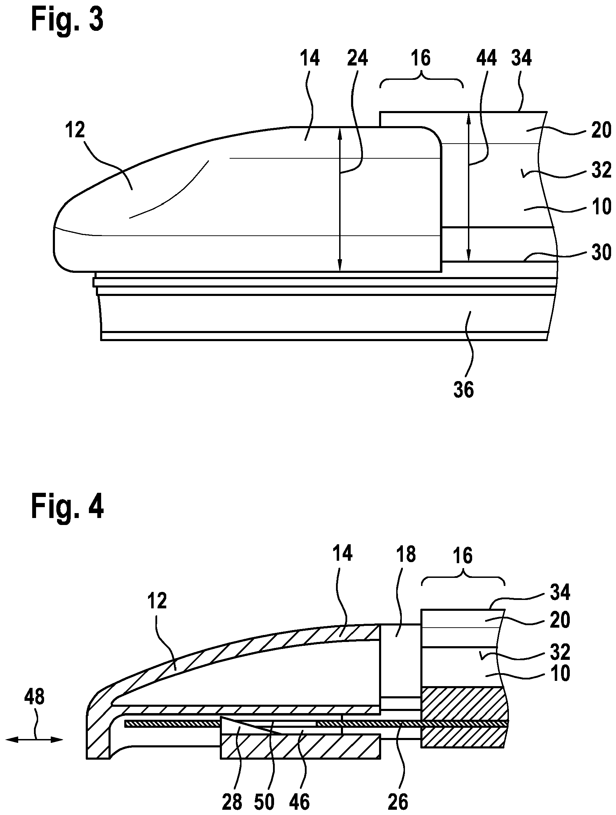

Wie in den Figuren 3 und 4 gezeigt, überragt das Windabweiserelement 10 die Deckwandung 14 in die Vertikalrichtung 22. Die Endkappe 12 weist ferner eine geringere Bauhöhe 24 auf, als das Windabweiserelement 10. Eine Bauhöhe 44 des Windabweiserelements 10 ist größer als die Bauhöhe 24 der Endkappe 12. Zur Montage weist die Endkappe 12 zwei seitlich angeordnete Führungsmittel 46 auf. Die Führungsmittel 46 sind dazu vorgesehen, bei einer Montage entlang einer Längserstreckungsrichtung 48 der Ausnehmung 18 auf das Windabweiserelement 10 geführt zu werden. Das Führungsmittel 46 bildet eine nicht näher gezeigte Führungsnut aus.

Die Endkappe 12 weist ein Rastmittel 28 auf, das dazu vorgesehen ist, mit der Federschiene 26 verrastet zu werden. Die Federschiene 26 umfasst hierbei eine mit dem Rastmittel 28 korrespondierende Rastausnehmung 50. Das Rastmittel 28 bildet einen Widerhaken aus, der ein Lösen der Endkappe 12 von dem Windabweiserelement 10 aus dem montierten Zustand verhindert.

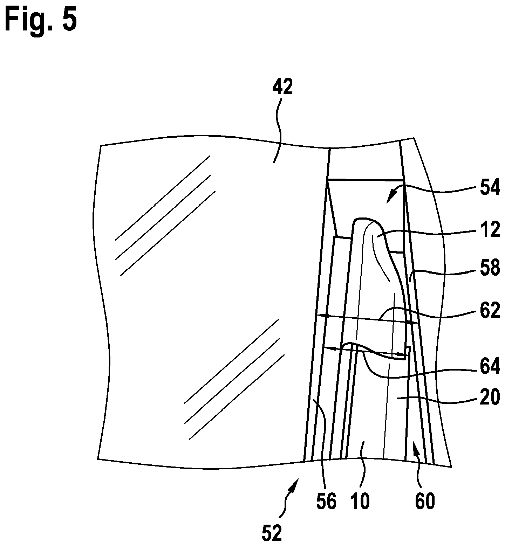

Die Figur 5 zeigt einen Ausschnitt eines Fahrzeugs 52 mit der Wischblattvorrichtung. Das Fahrzeug 52 weist die Fahrzeugscheibe 42 auf. Ferner umfasst das Fahrzeug 52 eine Wischblattlagereinheit 54 zur Lagerung der Wischblattvorrichtung. Die Wischblattlagereinheit 54 umfasst zwei Wandungen 56, 58, die einen Aufnahmebereich 60 zur Aufnahme der Wischblattvorrichtung aufspannen. Eine Breite 62 des Aufnahmebereichs 60 entspricht im Wesentlichen einer Vertikalerstreckung 64 der Wischblattvorrichtung.

## Patentansprüche

1. Wischblattvorrichtung mit zumindest einem Windabweiserelement (10) und mit zumindest einer Endkappe (12), die eine Deckwandung (14) umfasst, die zu einer Abdeckung eines Endbereichs (16) des zumindest einen Windabweiserelements (10) vorgesehen ist, wobei die Deckwandung (14) eine Ausnehmung (18) umfasst und das Windabweiserelement (10) eine Windabweiserspitze (20) umfasst, die zumindest in einem montierten Zustand durch die Ausnehmung (18) hindurchgeführt ist, **dadurch gekennzeichnet, dass** das zumindest eine Windabweiserelement (10) die Deckwandung (14) in eine Vertikalrichtung (22) überragt.

2. Wischblattvorrichtung nach Anspruch 1, **dadurch gekennzeichnet, dass** die zumindest eine Endkappe (12) eine geringere Bauhöhe (24) aufweist als das zumindest eine Windabweiserelement (10).

3. Wischblattvorrichtung nach einem der vorhergehenden Ansprüche, **dadurch gekennzeichnet, dass** die Ausnehmung (18) schlitzförmig ausgebildet ist.

4. Wischblattvorrichtung nach einem der vorhergehenden Ansprüche, **dadurch gekennzeichnet, dass** sich die Ausnehmung (18) innerhalb der Deckwandung (14) um weniger als ein Drittel einer Gesamtlängserstreckung der Endkappe (12) erstreckt.

5. Wischblattvorrichtung nach einem der vorhergehenden Ansprüche, **dadurch gekennzeichnet, dass** das zumindest eine Windabweiserelement (10) die Ausnehmung (18) in einem montierten Zustand um mehr als die Hälfte ausfüllt.

6. Wischblattvorrichtung nach einem der vorhergehenden Ansprüche, **dadurch gekennzeichnet, dass** die zumindest eine Endkappe (12) zumindest ein Führungsmittel (46) aufweist, das dazu vorgesehen ist, bei einer Montage entlang einer Längserstreckungsrichtung (48) der Ausnehmung (18) auf das Windabweiserelement (10) geführt zu werden.

7. Wischblattvorrichtung nach einem der vorhergehenden Ansprüche, **gekennzeichnet durch** zumindest eine Federschiene (26), wobei die Endkappe (12) zumindest ein Rastmittel (28) aufweist, das dazu vorgesehen ist, mit der zumindest einen Federschiene (26) verrastet zu werden.

## Claims

1. Wiper blade device with at least one wind deflector element (10) and with at least one end cap (12) which comprises a covering wall (14) which is provided for covering an end region (16) of the at least one wind deflector element (10), wherein the covering wall (14) comprises a recess (18) and the wind deflector element (10) comprises a wind deflector tip (20) which, at least in a mounted state, is guided through the recess (18), **characterized in that** the at least one wind deflector element (10) protrudes over the covering wall (14) in a vertical direction (22).

2. Wiper blade device according to Claim 1, **characterized in that** the at least one end cap (12) has a lower overall height (24) than the at least one wind deflector element (10).

3. Wiper blade device according to either of the preceding claims, **characterized in that** the recess (18) is of slot-shaped design.

4. Wiper blade device according to one of the preceding claims, **characterized in that** the recess (18) extends within the covering wall (14) by less than one third of an overall longitudinal extent of the end cap (12).

5. Wiper blade device according to one of the preceding claims, **characterized in that** the at least one wind deflector element (10) fills the recess (18) by more than half in a mounted state.

6. Wiper blade device according to one of the preceding claims, **characterized in that** the at least one end cap (12) has at least one guide means (46) which is provided to be guided along a longitudinal extent direction (48) of the recess (18) onto the wind deflector element (10) during installation.

7. Wiper blade device according to one of the preceding claims, **characterized by** at least one spring rail (26), wherein the end cap (12) has at least one latching means (28) which is provided to be latched to the at least one spring rail (26).

## Revendications

1. Dispositif de balai d'essuie-glace comprenant au moins un élément déflecteur de vent (10) et au moins un capuchon d'extrémité (12) qui comprend une paroi de recouvrement (14) qui est prévue pour recouvrir une région d'extrémité (16) de l'au moins un élément déflecteur de vent (10), la paroi de recouvrement (14) comprenant un évidement (18) et l'élément déflecteur de vent (10) comprenant une pointe de déflecteur de vent (20) qui est guidée à travers l'évidement (18) au moins dans un état monté, **caractérisé en ce que** l'au moins un élément déflecteur de vent (10) dépasse la paroi de recouvrement (14) dans une direction verticale (22).

2. Dispositif de balai d'essuie-glace selon la revendication 1, **caractérisé en ce que** l'au moins un capuchon d'extrémité (12) présente une plus faible hauteur de construction (24) que l'au moins un élément déflecteur de vent (10).

3. Dispositif de balai d'essuie-glace selon l'une quelconque des revendications précédentes, **caractérisé en ce que** l'évidement (18) est réalisé en forme de fente.

4. Dispositif de balai d'essuie-glace selon l'une quelconque des revendications précédentes, **caractérisé en ce que** l'évidement (18) s'étend à l'intérieur de la paroi de recouvrement (14) sur moins d'un tiers d'une étendue longitudinale totale du capuchon d'extrémité (12).

5. Dispositif de balai d'essuie-glace selon l'une quelconque des revendications précédentes, **caractérisé en ce que** l'au moins un élément déflecteur de vent (10) remplit l'évidement (18) sur plus de la moitié dans un état monté.

6. Dispositif de balai d'essuie-glace selon l'une quelconque des revendications précédentes, **caractérisé en ce que** l'au moins un capuchon d'extrémité (12) présente au moins un moyen de guidage (46) qui est prévu pour être guidé sur l'élément déflecteur de vent (10) lors d'un montage le long d'une direction d'étendue longitudinale (48) de l'évidement (18).

7. Dispositif de balai d'essuie-glace selon l'une quelconque des revendications précédentes, **caractérisé par** au moins un rail élastique (26), le capuchon d'extrémité (12) présentant au moins un moyen d'encliquetage (28) qui est prévu pour être encliqueté avec l'au moins un rail élastique (26) .
